(19) **Europäisches Patentamt**

**European Patent Office**

**Office européen des brevets**

(11) **EP 0 668 646 B1**

(12) **EUROPEAN PATENT SPECIFICATION**

(45) Date of publication and mention
of the grant of the patent:
**16.04.2003 Bulletin 2003/16**

(51) Int Cl.⁷: **H02H 5/04**, H05B 1/02,
H05B 3/34

(21) Application number: **95300815.8**

(22) Date of filing: **09.02.1995**

(54) **Improvements in or relating to electrically heated panels**

Verbesserungen an elektrisch geheizten Flächenheizelementen

Perfectionnements relatifs aux panneaux chauffants électriques

(84) Designated Contracting States:
**DE ES FR IT NL PT**

(30) Priority: **22.02.1994 GB 9403338**

(43) Date of publication of application:
**23.08.1995 Bulletin 1995/34**

(73) Proprietor: **IMETEC S.p.A.**
**Azzano S.P., Bergamo (IT)**

(72) Inventor: **Cole, Graham Malcolm**
**Sway, Lymington, Hampshire SO41 6BQ (GB)**

(74) Representative: **Bailey, Richard Alan et al**
**Marks & Clerk,**
**27 Imperial Square**
**Cheltenham, GL50 1RQ (GB)**

(56) References cited:
**EP-A- 0 562 850**       **EP-A- 0 566 302**

**Description**

The invention relates to electrical heating assemblies including electrically heated panels. The invention is particularly applicable to electric blankets, and will be specifically described in relation thereto. However, it will be appreciated that the invention may also be applied to many other forms of heated panels, such as under-carpet heaters, mattresses and pads.

Electric blankets commonly include a heating element in the form of inner arid outer concentric coil conductors separated by an electrically insulating layer. One or other, or both, of the coils provide the heating effect. Should overheating occur, the insulating layer separating the two conductors is designed to melt, causing the two conductors to come into electrical contact with one another, causing a short circuit or low impedance path to occur. This causes a change of current in the electric circuit containing the conductors, causing a fuse to blow and thus isolating the blanket from the mains supply.

There are many ways of detecting that a short circuit or low impedance path has developed between the two conductors, and examples of suitable circuits are described in British Patent Specifications Nos. 1155118, 1585921, 1599709, and 2028608. However, the known arrangements suffer from certain disadvantages and there are three particular problem areas which the arrangements described in the above-mentioned specifications, and many other arrangements, fail to address.

Apart from incorporating an effective overheat protection system an electric blanket must, in order to be a practical commercial proposition, also incorporate means for providing selective multiple heat settings. The above-mentioned specifications therefore all show ways in which the two resistive conductors of the heating element can be switched or electrically connected so as to provide the required alternative heat settings.

In practice, in order to achieve the required heat settings the four, or more, ends of the conductors are connected to either an in-line switch or a bedside control unit. In some cases the coaxial heating conductors themselves are extended, within a protective sheath, from the blanket to the switch in which the required electrical connections are made. In other blankets the ends of the heating conductors are connected to conventional bunch stranded copper multicore cables which lead to the switch or control unit where they are connected to electric circuitry for controlling the multiple heat settings and the overheat protection circuitry. In some blankets an intermediate multipin plug and socket may be provided between the blanket and the connecting cable leading to the switch or control unit.

In both of these known arrangements the sheath type interconnection or multicore cable is bulky and heavy and relatively stiff, particularly under cold conditions, and accordingly may be difficult to manipulate and stow away, leading to complaints from users as a result of the intrusive nature of the cables. More importantly, however, although electric blankets of this kind have led to a large reduction in fires caused by overheating of the blanket, there has been an increase in the number of fires caused by arcing due to failure of the electrical flex leading to the blanket. It is now well accepted that in the many blankets on the market today, which are well protected against overheating, the weakest part of the blanket is the multicore connection between the blanket and the switch or control box. This has been as a direct result of the provision of overheat protection because in early simple electric blankets which were used to preheat beds, and where overheat protection was not provided, it was possible to use simple slim two-core round flex, or flat twin cables, between the blanket and control switch or unit. The life of such cables, and resistance to fatigue and failure through flexing, is many times greater than that of, in particular, the bulky four core cables now conventionally required in blankets with overheat protection.

The incorporation of the above-mentioned advanced overheat protection systems in blankets has led to greater public confidence in using electric blankets, not just for pre-warming a bed, but also for all-night use as well. The increasing tendency for people to lie on or under electrically heated blankets has led to considerable research, mostly in U.S.A., on the question of whether being in close proximity to heating conductors, and the electro-magnetic fields which they radiate, has any adverse effect on the human body. Such research was initially triggered by the concern of many medical experts at the higher incidence of certain illnesses amongst people living in the vicinity of high voltage electric transmission lines. The field strengths under such power lines are very much higher than those emitted by electric blanket heating elements and to date no firm evidence has been found that these electro-magnetic fields can cause harm, although research is continuing. However, for the sake of public confidence, it is desirable that electric blankets should be so designed as to reduce to a minimum any electro-magnetic fields resulting from the electric current flowing through the heating elements.

Another disadvantage of known electric blankets having advanced overheat protection systems is the higher incidence of failure of an electrical component or fuse even though overheating has not occurred. The main reason for such failures is the transient breakdown of one of more of the components incorporated within the overheat protection circuitry.

Very often these overheat protection circuits incorporate various diodes, sometimes arranged "back-to-back" across the supply terminals. When a short circuit develops between the coaxial heating conductors, as a result of melting of the insulation layer, the increased current flow in these diodes causes a considerable increase in supply current, from d.c. (half-wave a.c.) to full-wave a.c., resulting in the blowing of a series fuse.

In practice, however, it has been found that transient breakdown of some of these protection diodes causes the series fuse to blow due to there being no limiting resistance in the fusing path. Thus, increasing the safety and reliability of the blanket with respect to overheating has led to increasing failures due to unforeseen control unit or switch component breakdowns caused by transient mains voltage perturbations.

Novel arrangements to overcome the above-mentioned disadvantages have been described and claimed in our co-pending British Patent Specification No. 2266201. The present invention relates to alternative novel forms of electric blanket, or other electrically heated panel, in which the above-mentioned disadvantages may also be overcome.

EP 0562850 describes a number of heating devices having a heating element and a thermally activated fuse arrangement operable to interrupt a circuit containing the heating element in the event that a short circuit occurs in the heating element.

According to the present invention there is provided an electrical heating assembly consisting of an electrically heated panel including an electric heating element comprising inner and outer coaxial coil conductors separated by an electrically insulating layer, first current rectifying means electrically connected in series between said conductors, and an adjustable control assembly for connection to an alternating current mains supply, the control assembly incorporating control means to vary the supply of current to the heating element, a thermally actuated fuse, second current rectifying means, and a resistor located adjacent the fuse and so connected to the second current rectifying means that in the event of short-circuiting of said first current rectifying means, as a result of overheating of the conductors leading to breakdown of said insulating layer, sufficient current flows through the resistor to raise its temperature sufficiently to actuate the fuse and interrupt the circuit leading to the conductors, characterised in that the first current rectifying means is carried on the electrically heated panel, the first current rectifying means and the heating element being the only electronic components of the assembly carried on the panel, the adjustable control assembly being separate from the panel and being connected to the conductors of the heating element by a two-core flexible electrical cable incorporating a detachable plug-and-socket connector.

Preferably said inner and outer conductors are of substantially the same electrical resistance.

Said control assembly may be adapted to vary the current flowing through the conductors during only one polarity cycle of the alternating mains supply, said first current rectifying means serving to prevent flow of current through the conductors during the opposite polarity cycle of the mains supply.

The control means itself may be of a kind to permit flow of current only in the direction permitted by said first current rectifying means. For example, the control means may comprise an SCR. In this case the second current rectifying means may be connected in parallel with said control means, and in opposition thereto, and in series with the aforesaid resistor.

Alternatively, the control means may be of the kind, such as a triac or mechanical regulator, to permit flow of current in both directions, said second current rectifying means being connected in series with the control means, and in the same orientation as said first current rectifying means, and said resistor being connected in parallel with the second current rectifying means.

In a further arrangement where the control means is of a kind to permit flow of current in both directions, there may be provided a third current rectifying means connected in series with the control means, and in the same orientation as said first current rectifying means, said second current rectifying means, in series with said resistor, being connected in parallel with said control means and third current rectifying means, the second and third current rectifying means being connected in opposition.

In any of the above arrangements each of the first, second and/or third current rectifying means may comprise a diode.

The control assembly preferably includes a conventional excess current operated fuse connected in series with said control means. By an excess current operated fuse is meant a fuse including a current-carrying conductive member which is melted, so as to break the circuit, as a direct result of an excess current flowing through the conductive member itself.

The following is a more detailed description of embodiments of the invention by way of example, reference being made to the accompanying drawings in which:

Figure 1 is a diagrammatic representation of an electric blanket and the electrical circuitry associated therewith,
Figure 2 is a similar view of a modified arrangement, and
Figures 3-6 show alternative modified forms of part of the control assembly for the electric blanket.

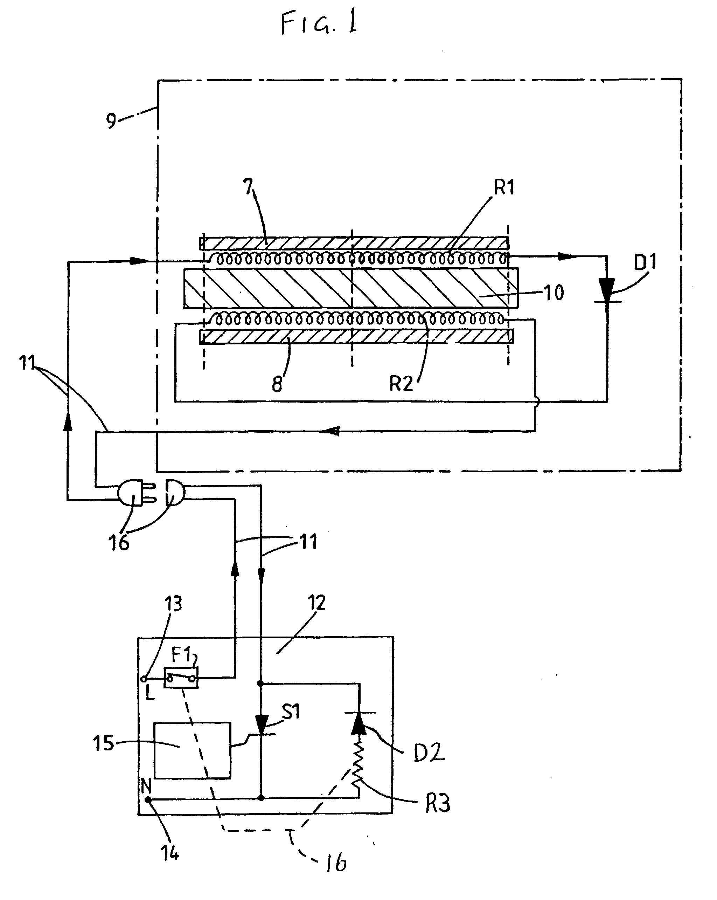

Referring to Figure 1: the heating element of the blanket (which is indicated diagrammatically at 9) comprises outer and inner coaxial coil conductors R1 and R2. The inner coil R2 may be wound on a central core 8 of rayon and is covered with a thin sheath of electrically insulating thermoplastic material which is indicated diagrammatically at 10. The outer coil R1 is wound on the sheet of insulating material 10 and is then itself covered in a second outer insulating sheath 7.

The insulating thermoplastic sheath 10 between the coils R1 and R2 may be either a low melting temperature plastics such as polyethylene or a higher melting temperature pvc, the impedance of which decreases with rise in temperature. The outer sheath 7 around the coil R1 may also be made of pvc.

The heating element is shown only diagrammatically in the drawing, and in practice will be in the form of a single flexible cable which is secured to the fabric of the blanket 9 in a tortuous or convoluted pattern so as to extend over substantially the whole area of the blanket, in well known manner. The construction and materials of the blanket itself, the pattern in which the heating element is arranged, and the manner in which it is secured to the blanket, do not form a part of the present invention and will not therefore be described in detail. Those skilled in the art will be well aware of the alternative forms of construction which are available.

The two conductors R1 and R2 are connected in series by a current rectifying device in the form of a diode D1. It will be seen that one end of the conductor R1 is connected, through the diode D1, to the opposite end of the conductor R2 so that current flows through both conductors in the same direction. The conductors R1 and R2 may be both of substantially the same resistance, for example about 240 Ohms.

The ends of the conductors R1 and R2 opposite their connections to the diode D1 are connected by wires 11 to a control unit 12. The wires 11 may comprise simple two-core electrical flex of well known kind, and may incorporate a simple two-core plug and socket 16. The flex may be round or flat or may be of coaxial construction. The flex may be of any convenient length so that the control unit 12 may be placed in any convenient position in relation to the electric blanket. Since only a simple two-core flex is required, the flex is not heavy, stiff or intrusive and may be conveniently laid or tucked in any position required so that the control unit 12 may, for example, be positioned on a bedside table or in any other convenient position, or may be embodied in an in-line switch near to the blanket.

Furthermore, the blanket may be disconnected from the control unit 12, by disconnecting the plug and socket 16, so that the blanket may be washed. This is not generally possible with prior electrical blankets where, due to the necessity of using heavy sheathed or multicore connecting cables, the control unit must in practice remain permanently connected to the blanket.

The wire 11 leading to the coil R1 is connected, in the control unit 12, to the line terminal 13 of an electric mains supply, through a thermally actuated fuse F1. The other wire 11, leading from the inner coil R2, is connected to the mains neutral terminal 14 through a thyristor S1 which is controlled by a manually adjustable control circuit indicated diagrammatically at 15.

Connected in parallel across the thyristor S1 is a second circuit rectifying device in the form of a shunt diode D2 in series with a resistor R3. The diode D2 is connected in opposition to the diode D1, i.e. it is arranged to pass current in the opposite direction to that permitted by the diode D1.

The resistor R3 is located adjacent the fuse F1 and is thermally coupled to it as indicated diagrammatically at 16 in Figure 1. The thermal fuse may typically be of ceramic or metal axial construction and may be thermally coupled to the resistor R3 by a body of grease, resin or paint to improve the response. The thermal fuse might be arranged to operate when raised to a temperature in the range of $75°$-$125°$C.

The thermal fuse F1 may, for example, be of the kind where heat from the resistor R3 causes a plastics or low-melting-point alloy in the fuse to melt, which in turn allows to spring apart two contacts which carry the appliance load current and are normally held together by the plastics or alloy. The operation of such a fuse is substantially independent of the current flowing through the fuse itself, and depends only on the current flowing through the associated resistor.

The blanket assembly operates as follows: in normal operation of the blanket, current flows through R1, D1, R2 and S1 in the positive half cycles of the mains supply, the current depending on the manual setting of the thyristor control circuit 15. The diode D2 and resistor R3 perform no function when the heating element is operating normally, since the diode D2 is in opposition to the direction of current during the positive half cycles when current flows.through the coils R1 and R2.

If overheating of the heating element occurs for any reason, the insulating thermoplastic layer 10 between the coils will melt so as to cause a short circuit or low impedance path between the coils R1 and R2 at the location where the insulation melts. As a result of this short circuit or low impedance path, current will begin to flow through R1 and R2 in both the positive and negative half cycles of the mains supply, in view of the short circuiting across the diode D1. During the negative half cycles of the mains supply, the shunt diode D2 will now allow current to flow through the resistor R3. The resistance of R3 is substantially greater than the resistance of R1 and R2. For example the conductors R1 and R2 may each have a resistance of 240 Ohms, whereas the resistor R3 may have a resistance of 5600 Ohms. Consequently most of the negative supply voltage cycles appear across the resistor R3 causing it to heat up rapidly and cause the fuse F1 to blow, thus isolating the blanket 9 and control assembly 12 from the mains supply.

In a typical blanket of say 60W at 240V:

$$\text{Heating current (rms)} = \frac{\sqrt{2} \times 60}{+240} = +0.35 \text{ Amp}$$

In the event of a fault the supply current will increase slightly due to current now flowing through R1, R2, D2 and R3 in negative half cycles.

$$\text{Fault current typically} = \frac{-240}{\sqrt{2} \times 5600} = -0.03 \text{ Amp}$$

i.e. the fault current will be only about 10% of the normal input current.

$$\text{Fault power in R3} = 0.03^2 \times 5600 = 5 \text{ Watts}$$

This power is more than sufficient to blow the fuse F1 within no more than 30 seconds of the resistor being energised.

In the arrangement of Figure 1 the end of the coil conductor R1 is connected, through the diode D1, to the opposite end of the coil conductor R2. Accordingly, the current flow through the coils R1 and R2 is in the same direction. As a result of this any electro-magnetic fields generated by the two coils will be combined. As previously mentioned, there has been some concern, although without firm evidence, that the electro-magnetic fields generated by an electric blanket may have an adverse effect on the human body, particularly in view of the increasing tendency for people to lie on or under an electrically heated blanket for the whole of the night.

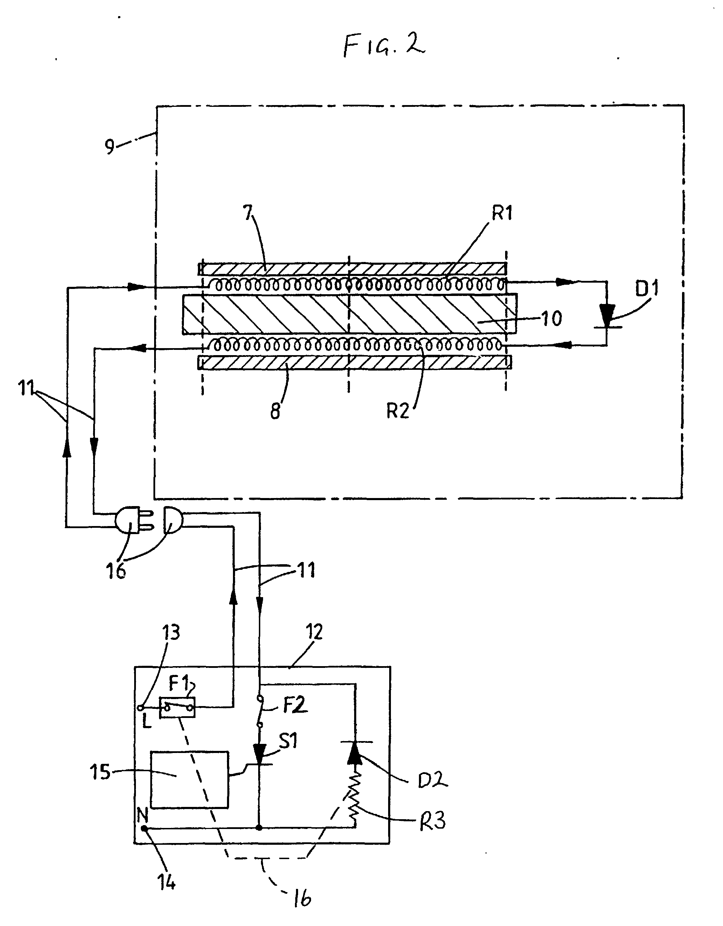

Figure 2 shows a modification of the arrangement shown in Figure 1 designed to reduce to a minimum any electro-magnetic fields resulting from the electric current flowing through the coil conductors. In the arrangement of Figure 2 the adjacent ends of the conductors R1 and R2 are connected by the diode D1. As a result of this the current flows in opposite directions in the two conductors so that the electro-magnetic fields generated by the conductors tend to cancel each other out.

The arrangement of Figure 1 has the advantage that, when a fault occurs, the resultant effective resistance of the two conductors will remain approximately the same regardless of the position where the fault occurs. In the modified arrangement of Figure 2, on the other hand, the effective resistance will vary substantially depending on where the fault occurs. Thus, if the fault occurs at the right hand end of the conductor, adjacent the diode D1, the effective resistance will be fairly close to the combined resistances of the two conductors. If the fault occurs at the left hand end of the heater element, remote from the diode D1, however, this will result in a virtual short circuit giving a massive increase in the current flow.

In order to protect the control device S1 in the event of such a failure, therefore, a conventional excess current operated fuse F2 is provided in the circuit in series with the control device S1, as shown in Figure 2. The fuse F2 can be a robust type of, say, 2 amp rating since its only purpose is to protect against faults near the left-hand end of the heating element. Normally, the resistor R3 will still be energised when a fault occurs, causing the fuse F1 to blow before the fuse F2. However, the incorporation of the conventional fuse F2 prevents short circuit failure of the device S1 from occurring, which would otherwise prevent the resistor R3 and the fuse F1 from being activated.

The fuse F2 may be of any suitable form and may comprise, for example, a fine wire cartridge or a low ohmic value fusible resistor.

In the arrangements of Figures 1 and 2 the control device S1 is shown as an SCR the duty cycle of which governs the amount of heat developed in the blanket. However, the invention is not limited to the use of control devices of this type, and a similar effect could be achieved by use of a triac or mechanical switching regulator. However, such devices would also permit current flow in the negative cycle of the mains supply and in view of this rearrangement of the protective components is required. Figures 3-6 show such alternative arrangements.

In the arrangement of Figure 3, the control device S1 is a triac, and in this case the resistor R3 is arranged in series with the triac. The diode D2 is connected in parallel with the resistor R3, but is now orientated to permit flow of current in the same direction as the diode D1, instead of in the opposite direction as was the case in the arrangements of Figures 1 and 2.

Now, during the positive half cycle, when the diode D1 permits flow of current through the heating element, the diode D2 bypasses the resistor R3 so that it is not energised. During normal operation of the blanket there is no current flow during the negative half cycle. However, when a fault occurs current flow also takes place during the negative half cycle and this is permitted by the triac S1. However, the orientation of the diode D2 is such that this current flow is not allowed to bypass the resistor R3 and it therefore flows through the resistor causing it to become heated and to trigger the fuse F1.

Figure 5 shows a similar arrangement, which works in the same way in the case where the control device S1 is a mechanical switching regulator as indicated diagrammatically in Figure 5.

Figure 4 shows an alternative arrangement where the control device S1 is a triac. In this case the resistor R3 and diode D2 are connected in parallel with the control device S1, in similar fashion to the arrangements of Figures 1 and 2, but in this case a further diode D3 is connected in series with the triac S and in opposition to the diode D2.

The effect of the additional diode D3 is to ensure that current only flows through the triac S1 in the positive half cycle of the mains supply. If a fault occurs in the heater, the diode D3 prevents current flowing through the triac S1 in the negative half cycle, and such current flows through the resistor R3 instead, causing actuation of the thermal fuse F1 as before.

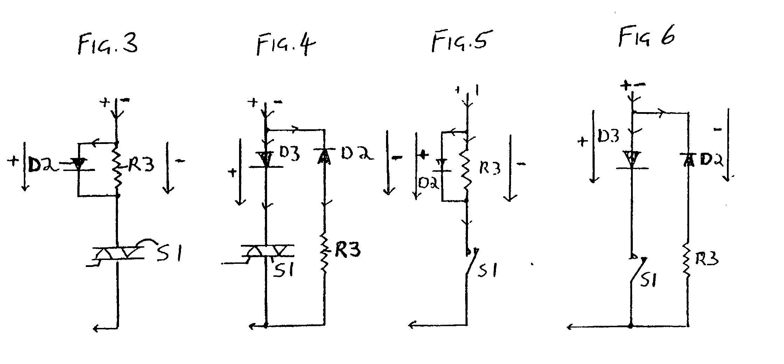

Figure 6 shows a similar arrangement to Figure 4 where the control device S1 is a mechanical switching regulator. The arrangement otherwise works in similar fashion to the arrangement of Figure 4.

In all the described arrangements the heating current in the positive half cycle passes through the control device S1, whatever form it takes, whereas in the event of a fault any current flowing in the negative half cycle is always steered through the fuse heating resistor R3.

In assemblies according to the present invention, in normal operation the same current always flows in both heating conductors R1 and R2 at the same time, such current being controlled by the manual setting of the control device S1. This permits the electric blanket to be connected to the control assembly by a simple two-core flexible cable with the advantages this gives. In most prior art arrangements variation in heating effect of the heating element is achieved by switching the connections between the conductors so that four heat settings are provided according to whether the current flows in one or other only of the two conductors, in both conductors in parallel, or both conductors in series. This involves connecting all four ends of the two conductors to a control switch which, as previously mentioned, necessitates the use of a bulky and stiff multi-core cable between the blanket and the control assembly.

In arrangements according to the invention the whole resistance of the heating conductors R1 and R2 is always in series with the diode D1 and control device S1, during normal operation, so that transient breakdown of either device is very unlikely. Similarly transient spikes capacitively transferred from one heatirg conductor to the other are also prevented from causing damage to the diode D2 via the series resistor R3.

**Claims**

1.  An electrical heating assembly consisting of an electrically heated panel (9) including an electric heating element comprising inner and outer coaxial coil conductors (R1,R2) separated by an electrically insulating layer (10), first current rectifying means (D1) electrically connected in series between said conductors, and an adjustable control assembly (12) for connection to an alternating current mains supply, the control assembly (12) incorporating control means (S1) to vary the supply of current to the heating element, a thermally actuated fuse (F1), second current rectifying means (D2), and a resistor (R3) located adjacent the fuse (F1) and so connected to the second current rectifying means (D2) that in the event of short-circuiting of said first current rectifying means (D1), as a result of overheating of the conductors (R1,R2) leading to breakdown of said insulating layer (10), sufficient current flows through the resistor (R3) to raise its temperature sufficiently to actuate the fuse (F1) and interrupt the circuit leading to the conductors, **characterised in that** the first current rectifying means (D1) is carried on the electrically heated panel (9), the first current rectifying means (D1) being the only electronic component ofthe assembly other than the heating element carried on the panel (9), the adjustable control assembly (12) being separate from the panel (9) and being connected to the conductors (R1,R2) of the heating element by a two-core flexible electrical cable (11) incorporating a detachable plug-and-socket connector (16).

2.  An electrical heating assembly according to Claim 1, **characterised in that** said inner and outer conductors (R1,R2) are of substantially the same electrical resistance.

3.  An electrical heating assembly according to Claim 1 or Claim 2, **characterised in that** said control assembly (12) is adapted to vary the current flowing through the conductors during only one polarity cycle of the alternating mains supply, said first current rectifying means (D1) serving to prevent flow of current through the conductors during the opposite polarity cycle of the mains supply.

4.  An electrical heating assembly according to any of Claims I to 3, **characterised in that** the control means (S1) is of a kind to permit flow of current only in the direction permitted by said first current rectifying means (D1).

5.  An electrical heating assembly according to Claim 4, **characterised in that** the control means (S1) comprises an SCR.

6.  An electrical heating assembly according to Claim 5, **characterised in that** the second current rectifying means (D2) is connected in parallel with said control means (S1), and in opposition thereto, and in series with the aforesaid resistor (R3).

7.  An electrical heating assembly according to Claim 5, **characterised in that** the control means (S1, Fig. 3) is of the kind to permit flow of current in both directions, said second current rectifying means (D2) being connected in series with the control means, and in the same orientation as said first current rectifying means (D1), and said resistor (R3) being connected in parallel with the second current rectifying means.

8.  An electrical heating assembly according to Claim 6, **characterised in that** said control means (S1) is a triac or mechanical regulator.

9.  An electrical heating assembly according to Claim 1 or Claim 2, **characterised in that** the control means (S1, Fig. 4) is of a kind to permit flow of current in both directions, and there is provided a third current rectifying means (D3) connected in series with the control means (S1), and in the same orientation as said first current rectifying means (D1), said second current rectifying means (D2), in series with said resistor (R3), being connected in parallel with said control means (S1,Fig.4) and third current rectifying means (D3), the second and third current rectifying means (D2,D3) being connected in opposition.

10. An electrical heating assembly according to any of the preceding claims, **characterised in that** each of the first, second and/or third current rectifying means (D1,D2,D3) comprise a diode.

11. An electrical heating assembly according to any of the preceding claims, **characterised in that** the control assembly (12) includes a conventional excess current operated fuse (F2) connected in series with said control means (S1).

**Patentansprüche**

1. Elektrische Erwärmungsanordnung, bestehend aus einem elektrisch erwärmten Feld (9) mit einem elektrischen Erwärmungselement, umfassend innere und äußere koaxiale Spulenleiter (R1, R2), die durch eine elektrisch isolierende Schicht (10) getrennt sind, einer ersten Stromgleichrichtungseinrichtung (D1), die zwischen die Leiter elektrisch in Serie geschaltet ist, und einer einstellbaren Steueranordnung (12) zur Verbindung mit einer Wechselstrom-Hauptstromversorgung, wobei die Steueranordnung (12) eine Steuereinrichtung (S1) beinhaltet, um die Zuführung von Strom an das Erwärmungselement zu verändern, einer thermisch betätigten Sicherung (F1), einer zweiten Stromgleichrichtungseinrichtung (D2) und einem Widerstand (R3), der benachbart zu der Sicherung (F1) angeordnet und so mit der zweiten Stromgleichrichtungseinrichtung (D2) verbunden ist, dass für den Fall eines Kurzschlusses der ersten Stromgleichrichtungseinrichtung (D1), als Folge eines Überhitzens der Leiter (R1, R2), was zu einem Durchbruch der isolierenden Schicht (10) führt, ausreichend Strom durch den Widerstand (R3) fließt, um dessen Temperatur ausreichend anzuheben, um die Sicherung (F1) zu betätigen und die Schaltung, die zu den Leitern führt, zu unterbrechen, **dadurch gekennzeichnet, dass** die erste Stromgleichrichtungseinrichtung (D1) auf dem elektrisch erwärmten Feld (9) getragen wird, wobei die erste Stromgleichrichtungseinrichtung (D1) die einzige elektronische Komponente der Anordnung außer dem Erwärmungselement ist, die auf dem Feld (9) getragen wird, wobei die einstellbare Steueranordnung (12) getrennt von dem Feld (9) ist und mit den Leitern (R1, R2) des Erwärmungselements durch ein flexibles elektrisches Zweikernkabel (11), das einen entfernbaren Stecker- und Buchsen-Verbinder (16) beinhaltet, verbunden ist.

2. Elektrische Erwärmungsanordnung nach Anspruch 1, **dadurch gekennzeichnet, dass** die inneren und äußeren Leiter (R1, R2) im Wesentlichen von dem gleichen elektrischen Widerstand sind.

3. Elektrische Erwärmungsanordnung nach Anspruch 1 oder Anspruch 2, **dadurch gekennzeichnet, dass** die Steueranordnung (12) dafür ausgelegt ist, um den Strom zu verändern, der durch die Leiter während nur eines Polaritätszyklusses der Wechselstrom-Hauptstromversorgung fließt, wobei die erste Stromgleichrichtungseinrichtung (D1) dazu dient, einen Stromfluss durch die Leiter während des entgegengesetzten Polaritätszyklusses der Hauptstromversorgung zu verhindern.

4. Elektrische Erwärmungsanordnung nach irgendeinem der Ansprüche 1 bis 3, **dadurch gekennzeichnet, dass** die Steuereinrichtung (S1) von einer Art ist, um einen Stromfluss nur in der Richtung zuzulassen, die durch die erste Stromgleichrichtungseinrichtung (D1) zugelassen wird.

5. Elektrische Erwärmungsanordnung nach Anspruch 4, **dadurch gekennzeichnet, dass** die Steuereinrichtung (S1) einen SCR umfasst.

6. Elektrische Erwärmungsanordnung nach Anspruch 5, **dadurch gekennzeichnet, dass** die zweite Stromgleichrichtungseinrichtung (D2) parallel zu der Steuereinrichtung (S1) und entgegengesetzt dazu und in Serie zu dem voranstehend erwähnten Widerstand (R3) geschaltet ist.

7. Elektrische Erwärmungsanordnung nach Anspruch 5, **dadurch gekennzeichnet, dass** die Steuereinrichtung (S1, Figur 3) von der Art ist, um einen Stromfluss in beide Richtungen zuzulassen, wobei die zweite Stromgleichrichtungseinrichtung (D2) zu der Steuereinrichtung in Serie geschaltet ist, und in der gleichen Orientierung wie die erste Stromgleichrichtungseinrichtung (D1), und der Widerstand (R3) parallel zu der zweiten Stromgleichrichtungseinrichtung geschaltet ist.

8. Elektrische Erwärmungsanordnung nach Anspruch 6, **dadurch gekennzeichnet, dass** die Steuereinrichtung (S1) ein Triac oder ein mechanischer Regler ist.

9. Elektrische Erwärmungsanordnung nach Anspruch 1 oder Anspruch 2, **dadurch gekennzeichnet, dass** die Steuereinrichtung (S1, Figur 4) von einer Art ist, um einen Stromfluss in beide Richtungen zuzulassen; und eine dritte Stromgleichrichtungseinrichtung (D3) vorgesehen ist, die in Serie zu der Steuereinrichtung (S1) geschaltet ist, und in der gleichen Orientierung wie die erste Stromgleichrichtungseinrichtung (D1), die zweite Stromgleichrichtungseinrichtung (D2), in Serie zu dem Widerstand (R3), parallel geschaltet zu der Steuereinrichtung (S1, Figur 4) und der dritten Stromgleichrichtungseinrichtung (D3), wobei die zweiten und dritten Stromgleichrichtungseinrichtungen (D2, D3) entgegengesetzt geschaltet sind.

10. Elektrische Erwärmungsanordnung nach irgendeinem der vorangehenden Ansprüche, **dadurch gekennzeichnet, dass** die erste, zweite und/oder dritte Stromgleichrichtungseinrichtung (D1, D2, D3) eine Diode umfasst.

11. Elektrische Erwärmungsanordnung nach irgendeinem der vorangehenden Ansprüche, **dadurch gekennzeichnet, dass** die Steueranordnung (12) eine herkömmliche durch einen Überstrom betriebene Sicherung (F2) einschließt, die zu der Steuereinrichtung (F1) in Serie geschaltet ist.

## Revendications

1. Assemblage de chauffage électrique constitué par un panneau chauffé électriquement (9) qui inclut un élément de chauffage électrique qui comprend des conducteurs bobinés coaxiaux interne et externe (R1, R2) qui sont séparés par une couche électriquement isolante (10), un premier moyen de redressement de courant (D1) qui est connecté électriquement en série entre lesdits conducteurs et un assemblage de commande réglable (12) pour une connexion à une alimentation secteur en courant alternatif, l'assemblage de commande (12) incorporant un moyen de commande (S1) pour faire varier l'alimentation en courant sur l'élément de chauffage, un fusible actionné thermiquement (F1), un second moyen de redressement de courant (D2) et une résistance (R3) qui est localisée de manière à être adjacente au fusible (F1) et qui est connectée au second moyen de redressement de courant (D2) de telle sorte que, dans le cas d'un court-circuit dudit premier moyen de redressement de courant (D1), en tant que résultat d'une surchauffe des conducteurs (R1, R2) aboutissant à une rupture de ladite couche isolante (10), un courant suffisant circule au travers de la résistance (R3) pour augmenter sa température suffisamment pour actionner le fusible (F1) et pour interrompre le circuit aboutissant aux conducteurs, **caractérisé en ce que** le premier moyen de redressement de courant (D1) est supporté sur le panneau chauffé électriquement (9), le premier moyen de redressement de courant (D1) étant le seul composant électronique de l'assemblage autre que l'élément chauffant supporté sur le panneau (9), l'assemblage de commande réglable (12) étant séparé du panneau (9) et étant connecté aux conducteurs (R1, R2) de l'élément chauffant au moyen d'un câble électrique flexible à deux noyaux (11) qui incorpore un connecteur prise mâle/prise femelle amovible (16).

2. Assemblage de chauffage électrique selon la revendication 1, **caractérisé en ce que** lesdits conducteurs interne et externe (R1, R2) sont sensiblement de la même valeur de résistance électrique.

3. Assemblage de chauffage électrique selon la revendication 1 ou 2, **caractérisé en ce que** ledit assemblage de commande (12) est adapté pour faire varier le courant qui circule au travers des conducteurs pendant seulement un cycle d'une polarité de l'alimentation secteur en courant alternatif, ledit premier moyen de redressement (D1) servant à empêcher qu'un courant ne circule au travers des conducteurs pendant le cycle de polarité opposé de l'alimentation secteur.

4. Assemblage de chauffage électrique selon l'une quelconque des revendications 1 à 3, **caractérisé en que** le moyen de commande (S1) est d'un type qui permet qu'un courant ne circule que suivant la direction qui est autorisée par ledit premier moyen de redressement de courant (D1).

5. Assemblage de chauffage électrique selon la revendication 4, **caractérisé en ce que** le moyen de commande (S1) comprend un SCR.

6. Assemblage de chauffage électrique selon la revendication 5, **caractérisé en ce que** le second moyen de redressement de courant (D2) est connecté en parallèle audit moyen de commande (S1) et en opposition à celui-ci ainsi qu'en série avec la résistance (R3) mentionnée ci-avant.

7. Assemblage de chauffage électrique selon la revendication 5, **caractérisé en ce que** le moyen de commande (S1, figure 3) est du type pour permettre qu'un courant circule dans les deux directions, ledit second moyen de redressement de courant (D2) étant connecté en série au moyen de commande et selon la même orientation que ledit premier moyen de redressement de courant (D1), et ladite résistance (R3) étant connectée en parallèle au second moyen de redressement de courant.

8. Assemblage de chauffage électrique selon la revendication 6, **caractérisé en ce que** le moyen de commande (S1) est un triac ou un régulateur mécanique.

9. Assemblage de chauffage électrique selon la revendication 1 ou 2, **caractérisé en ce que** le moyen de commande (S1, figure 4) est d'un type pour permettre qu'un courant circule dans les deux directions, et un troisième moyen de redressement de courant (D3) qui est connecté en série avec le moyen de commande (S1) et selon la même orientation que ledit premier moyen de redressement de courant (D1) est prévu, ledit second moyen de redressement de courant (D2), en série avec ladite résistance (R3), étant connecté en parallèle audit moyen de commande (S1, figure 4) et audit troisième moyen de redressement de courant (D3), les second et troisième moyens de redressement de courant (D2, D3) étant connectés en opposition.

10. Assemblage de chauffage électrique selon l'une quelconque des revendications précédentes, **caractérisé en ce que** chacun des premier, second et/ou troisième moyens de redressement de courant (D1, D2, D3) comprend une diode.

11. Assemblage de chauffage électrique selon l'une quelconque des revendications précédentes, **caractérisé en ce que** l'assemblage de commande (12) inclut un fusible actionné par courant excessif classique (F2) qui est connecté en série avec ledit moyen de commande (SI).

# FIG. 1

FIG. 2

FIG.3 FIG.4 FIG.5 FIG 6